# EUROPEAN PATENT APPLICATION

(11) **EP 2 034 224 A2**
(43) Date of publication of application: **11.03.2009**
(21) Application number: 08163628.4
(22) Date of filing: 03.09.2008
(51) Int. Cl.: F16K 1/20

(54) **Check valves with noise reducer**

(30) Priority: 05.09.2007 US 850179
(71) Applicant: Honeywell International Inc., Morristown, NJ 07962 (US)
(72) Inventor: McGonigle, Gerald S., Gilbert, AZ 85297 (US); Atkins, Don J., Chandler, AZ 85224 (US); Denike, Stuart K., Phoenix, AZ 85048 (US)
(74) Representative: Buckley, Guy Julian

(57) **Abstract**

A check valve includes a valve body, a flapper, and a seat region. The valve body (202) has an upstream side, a downstream side, and a first valve flow channel that extends between the upstream and downstream sides. The flapper (204) is rotationally mounted on the valve body, and is movable between a closed position and an open position. When in the closed position, the flapper (204) at least substantially closes the first valve flow channel. When in the open position, the flapper at least substantially opens the first valve flow channel. The seat region (205) is formed in the valve body, and is configured to seat the flapper (204) and make contact therewith when the flapper is in the closed position. The seat region comprises an elastomer material.

## Description

### TECHNICAL FIELD

The present invention relates generally to check valves and, more particularly, to check valves with a noise reducer.

### BACKGROUND

Insert style check valves are used to control air flow in a pneumatic system, and may be installed for the purpose of reducing system weight and costs. For example, the check valves may be used to replace larger, body style check valves that are in ducts of the pneumatic system. Generally, check valves operate by moving between a closed position, where the valve seals the duct and prevents air from flowing in a reverse direction, and an open position, where the valve unseals the duct and allows air flow in a forward direction.

One particular type of check valve is a split-flapper check valve, which can be used in an air distribution system of an airplane, among other types of systems. Traditional split-flapper check valves for air distribution systems are made entirely of metal, and are located in occupied areas of aircraft. The all-metal design allows for high levels of durability and impact resistance, while typically requiring little or no maintenance. While such split flapper check valves are generally safe and reliable, they can open and close quickly and with significant impact forces. This may result in undesirable noise that can be disturbing to a pilot or other individuals onboard an airplane. Additionally, such split flapper check valves may experience wear, for example due to the impact forces on the metal, and because such split flapper check valves generally operate in environments that are likely to cause wear on the check valves.

Accordingly, it is desired to provide a check valve with reduced noise when opening and closing. It is also desired to provide a check valve with reduced wear and/or with improved robustness. It is further desired to provide a check valve with these features while still have the capabilities of an all-metal design, for example with desired levels of durability and impact resistance, and preferably requiring little or no maintenance. Furthermore, other desirable features and characteristics of the present invention will be apparent from the subsequent detailed description and the appended claims, taken in conjunction with the accompanying drawings and the foregoing technical field and background.

### BRIEF SUMMARY

In accordance with an exemplary embodiment of the present invention, a check valve is provided. The check valve comprises a valve body, a flapper, and a seat region. The valve body has an upstream side, a downstream side, and a first valve flow channel that extends between the upstream and downstream sides. The flapper is rotationally mounted on the valve body, and is movable between a closed position and an open position. When in the closed position, the flapper at least substantially closes the first valve flow channel. When in the open position, the flapper at least substantially opens the first valve flow channel. The seat region is formed in the valve body, and is configured to seat the flapper and make contact therewith when the flapper is in the closed position. The seat region comprises an elastomer material.

In accordance with another exemplary embodiment of the present invention, a check valve is provided. The check valve comprises a valve body, a flapper, and a stop. The valve body has an upstream side, a downstream side, and a first valve flow channel that extends between the upstream and downstream sides. The flapper is rotationally mounted on the valve body, and is movable between a closed position and an open position. When in the closed position, the flapper at least substantially closes the first valve flow channel. When in the open position, the flapper at least substantially opens the first valve flow channel. The stop is mounted on the valve body, and is configured to contact the flapper when the flapper is in a fully open position. The stop is made, at least partially, of an elastomer material.

In accordance with a further exemplary embodiment of the present invention, a check valve is provided. The check valve comprises a valve body, a plurality of flappers, and a seat region. The valve body has an upstream side, a downstream side, and a plurality of valve flow channels that extend between the upstream and downstream sides. The plurality of flappers are rotationally mounted on the valve body. Each flapper is movable between a closed position and an open position. When in the closed position, such flapper at least substantially closes a valve flow channel. When in the open position, such flapper at least substantially opens a valve flow channel.

Other independent features and advantages of the preferred embodiments of the check valves will become apparent from the following detailed description, taken in conjunction with the accompanying drawings which illustrate, by way of example, the principles of the invention.

### BRIEF DESCRIPTION OF THE DRAWINGS

FIG. 1 is a simplified schematic diagram illustrating an air distribution system of an aircraft;

FIG. 2 is a perspective plan view, from a downstream side and in a closed position, of a check valve that may be used in the system of FIG. 1 in accordance with an exemplary embodiment of the present invention;

FIG. 3 is a perspective plan view, from a downstream side and in an open position, of a check valve that may be used in the system of FIG. 1 in accordance with an exemplary embodiment of the present invention;

FIG. 4 is a plan view, from an upstream side and in an open position, of a check valve that may be used in the system of FIG. 1 in accordance with an exemplary embodiment of the present invention;

FIG. 5 is a close-up perspective plan view, from a downstream side and in a closed position, of a portion of a check valve that may be used in the system of FIG. 1 in accordance with an exemplary embodiment of the present invention; and

FIG. 6 is a simplified cross sectional view of a portion of a check valve that may be used in the system of FIG. 1, showing a portion of a valve seat and a valve body and encasement connected thereto in accordance with an exemplary embodiment of the present invention.

### DETAILED DESCRIPTION OF A PREFERRED EMBODIMENT

The following detailed description of the invention is merely exemplary in nature and is not intended to limit the invention or the application and uses of the invention. Furthermore, there is no intention to be bound by any theory presented in the preceding background or the following detailed description. In this regard, although the invention is described herein as being implemented in an air distribution system, it will be appreciated that it could also be implemented in any one of numerous other types of systems that direct the flow of various types of fluid, such as within an aircraft, or within any one of numerous other types of vehicles or other types of apparatus or systems.

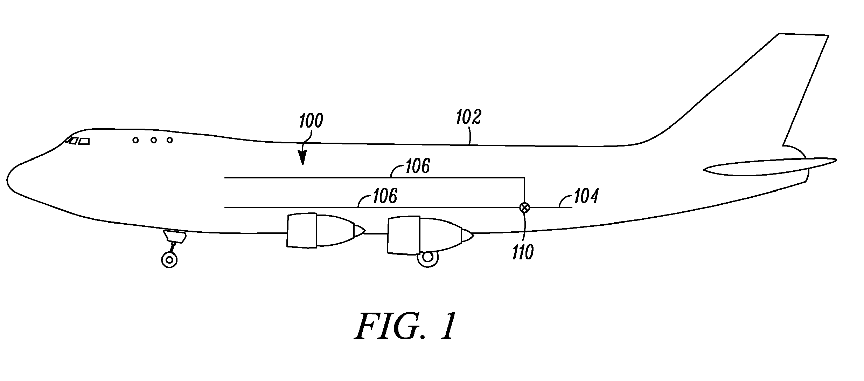

FIG. 1 is a simplified schematic diagram illustrating an air distribution system 100 disposed within an aircraft 102. The air distribution system 100 includes an inlet duct 104, one or more outlet ducts 106 (two outlet ducts 106 are depicted in FIG. 1), and a check valve 110 positioned in one of the outlet ducts 106. The inlet duct 104 receives air from an air source such as for example engine bleed air, and the outlet ducts 106 exhaust air into desired sections of the aircraft 102. In one exemplary embodiment, at least one of the outlet duct 106 exhausts air into or out of an aircraft cabin (not shown). The check valve 110 is configured to control the air flow through the outlet ducts 106 and to prevent the air from flowing in a reverse direction back through the inlet duct 104.

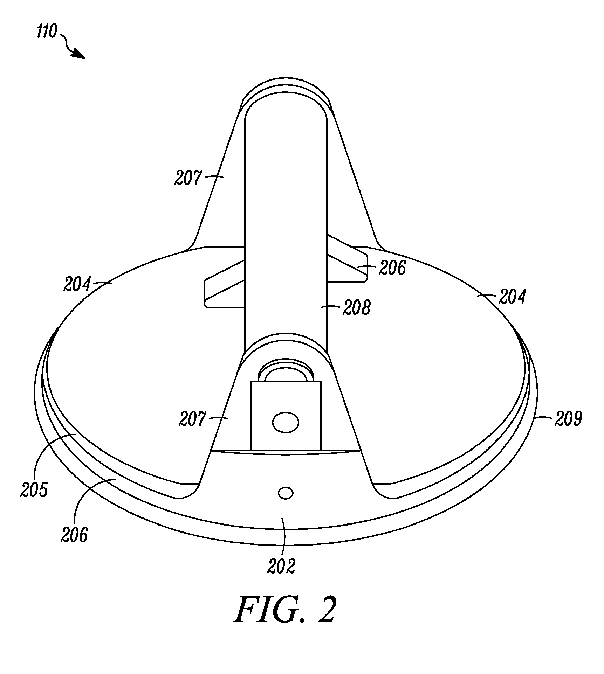

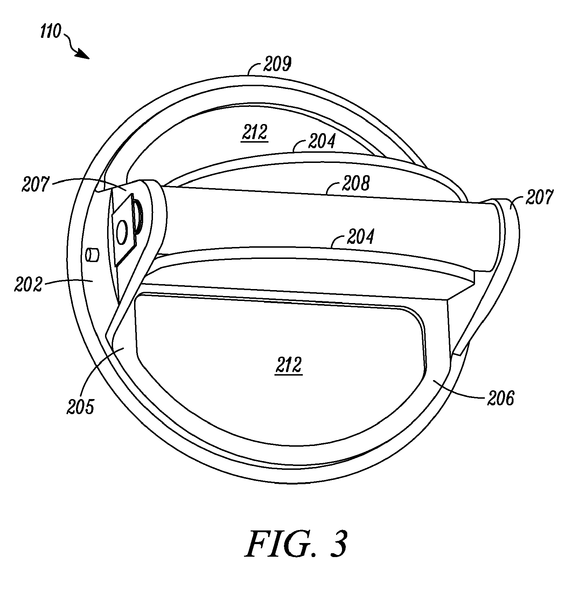

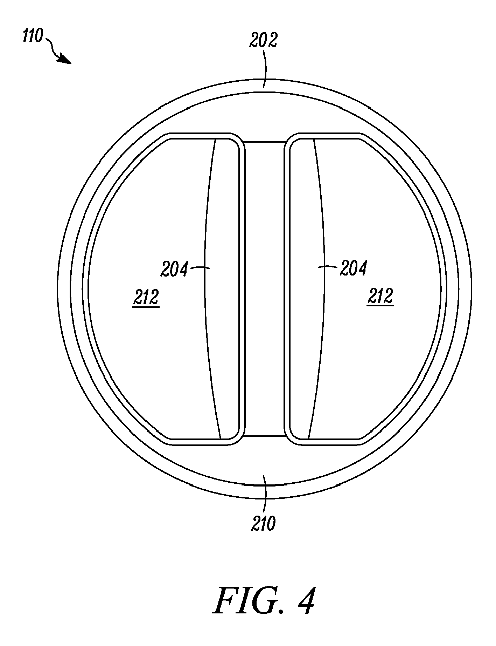

FIGS. 2-4 are plan views of an exemplary embodiment of the check valve 110 in accordance with the present invention. Specifically, FIG. 2 depicts the check valve 110 from a downstream side and in a closed position, FIG. 3 depicts the check valve 110 from a downstream side and in an open position, and FIG. 4 depicts the check valve 110 from an upstream side and in an open position. In one preferred embodiment, the check valve 110 is a gas check valve configured to control the flow of one or more gases therethrough.

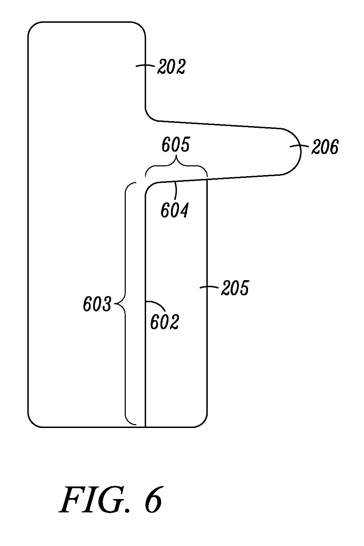

As shown in FIGS. 2-4, the check valve 110 includes a valve body 202, a pair of flappers 204, a seat region 205 (FIGS. 2 and 3), a pair of support flanges 207 (FIGS. 2 and 3), a stop 208 (FIGS. 2 and 3), and an encasement 206 (FIGS. 2 and 3). The valve body 202 includes a downstream side 209 (FIGS. 2 and 3), an upstream side 210 (FIG. 4), and a pair of flow channels 212 (FIGS. 3 and 4) that extend between the downstream and upstream sides 209, 210. A hinge pin 216 (FIG. 2, and also described further below in connection with a close-up view of FIG. 6) couples the flappers 204 with the valve body 202. In a preferred embodiment, the valve body 202 is annular in shape. However, in other embodiments, the valve body 202 can have any one of a number of different shapes compatible with the inlet duct 104 and the one or more outlet ducts 106 of FIG. 1 coupled thereto.

The flappers 204 are rotationally mounted on the hinge pin 216, which in turn is mounted on the valve body 202. The flappers 204 are movable between a closed position and a fully-open position. In the closed position (depicted in FIG. 2), the flappers 204 engage the seat region 205 on the valve body 202 to seal, or at least substantially seal, a corresponding flow channel 212. In the fully-open position (depicted in FIGS. 3 and 4), or any one of numerous partially open positions, the flappers 204 unseal the corresponding flow channel 212. Thus, when the flappers 204 are in the closed position fluid flow through the flow channels 212 is prevented or at least substantially inhibited. Conversely, when the flappers 204 are in an open position fluid flow through the flow channels 212 is allowed.

The check valve 110 is preferably configured such that both flappers 204 are simultaneously in either the closed or an open position, as shown in FIGS. 2-4. However, as will also be described further below, this is merely exemplary of a particular embodiment, and the check valve 110 could be configured such that each flapper 204 may be individually moved to an open position. Moreover, although the check valve 110 is preferably implemented with a pair of flow channels 212 and a pair of flappers 204, it will be appreciated that the check valve 110 could, in an alternative embodiment, be implemented with a single flow channel 212 and a single flapper 204 or with three or more flow channels 212 and three or more flappers 204.

As mentioned above, the seat region 205 contacts and seats each flapper 204 when the flappers 204 are in the closed position and thereby prevents the flow of fluid through the flow channels 212 when the flappers 204 are in the closed position. The seat region 205 comprises an elastomer material. The seat region 205 thereby minimizes wear and noise during operation of the check valve 110 in addition to preventing fluid from flowing through the flow channels 212 when the flappers 204 are in the closed position. Moreover, the seat region 205 reduces noise and wear without interfering with the flow path of fluid through the flow channels 212 and without otherwise interfering with the performance of the check valve 110. While a single seat region 205 is depicted in the exemplary embodiment, in other embodiments the check valve 110 may include multiple seat regions 205, and may by way of example include a separate elastomer seat region 205 for each flapper 204.

In a preferred embodiment, the elastomer seat region 205 comprises a type of elastomer material that is selected to achieve the desired noise reduction, while being durable enough for a specific application for the check valve 110. Preferably, a low durometer elastomer material is used for applications in which a high level of durability and impact resistance is desired, such as the applications discussed herein. In one preferred embodiment, the elastomer material is a silicon-based elastomer material, most preferably a silicone rubber material.

The encasement 206 at least partially surrounds the seat region 205 and preferably comprises the same material as the valve body 202, most preferably a metal such as aluminum or titanium. The encasement 206 extends far enough from the seat region 205 so that the flappers 204 do not contact the encasement 206 and so that the encasement 206 is easily identified from a distance within the air distribution system 100. Accordingly, the encasement 206 serves as an identifying mark in the event that the check valve 110 needs to be examined, repaired, or replaced.

The pair of support flanges 207 extend axially from the valve body downstream side 209. The stop 208 is coupled to, and extends between, the support flanges 207. The stop 208 is configured to at least substantially stop movement of the flappers 204 when the flappers 204 approach the fully open position. Additionally, in a preferred embodiment, the stop 208 also prevents the flappers 204 from going reaching an over-center position, and helps to ensure that each of the flappers 204 open.

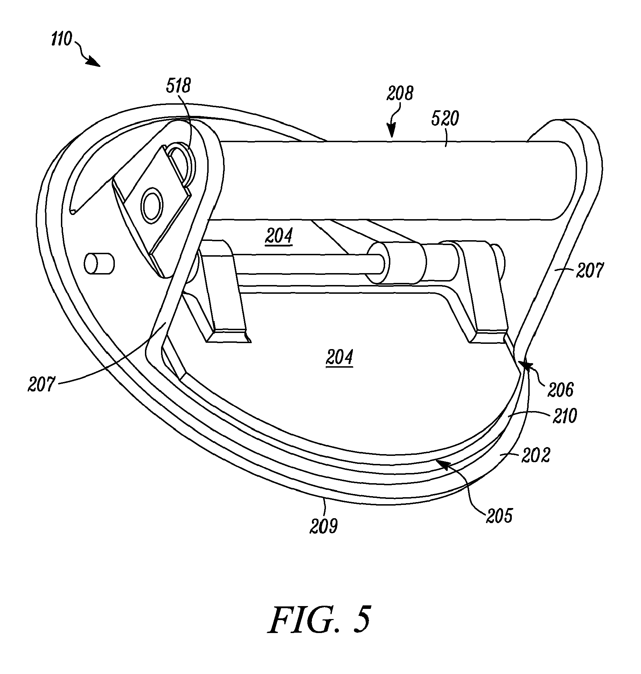

Turning now to FIG. 5, a close-up perspective plan view of the check valve 110 depicts in greater detail an exemplary embodiment of the stop 208 in accordance with the present invention. Similar to FIG. 1, the portion of the check valve 110 in FIG. 5 is shown from a downstream side and in a closed position. In the depicted embodiment, the stop 208 includes a stop tube 518 and a sleeve 520. The stop tube 518 extends between and is supported by the pair of support flanges 207, and is preferably made at least in part of a metal such as aluminum or titanium, or another material with sufficient rigidity to remain in place and cause the flappers 204 to stop when making contact therewith without causing undue stress on the flapper 204 and/or the hinge pin 216, and may also incorporate a spring feature (not depicted). The sleeve 520 surrounds the stop tube 518, and comprises an elastomer material, thereby reducing noise and/or wear when the flappers 204 contact the sleeve 520. In one embodiment the elastomer material is a silicon-based elastomer; however, other elastomer materials may also be used. The elastomer material used in the sleeve 520 may be the same as or different from the elastomer material used in the seat region 205, and is selected based on achieving the desired noise reduction while being durable for the specific application. For example, as described above, in a preferred embodiment a low durometer elastomer material may be used, most preferably a silicone rubber material. While a single stop 208 is depicted in FIG. 2, it will be appreciated that the check valve 110 may include two or more stops 208.

Turning now to FIG. 6, a simplified cross sectional view of a portion of the check valve 110 is provided, showing a close-up view of a portion of the seat region 205 as attached to the valve body 202 and the encasement 206. In the depicted embodiment, a bottom portion 602 of the seat region 205 is attached to the valve body 202, thereby forming a first attachment region 603. Also as shown in FIG. 6, a side portion 604 of the seat region 205 is attached to the encasement 206, thereby forming a second attachment region 605. As mentioned above, both the valve body 202 and the encasement 206 preferably comprise a metal such as aluminum or titanium. The first and second attachment regions 603, 605 thus help to improve the stability of the seat region 205 and to prevent unwanted movement of the seat region 205, for example as fluid flows through the flow channels 212.

Having now described various structural features of an exemplary embodiment of the check valve 110, a brief description of the operation of an exemplary embodiment of the check valve 110 will now be provided. For illustrative purposes only, the operation of the check valve 110 will be described with the check valve 110 beginning in the closed position as depicted in FIGS. 2 and 5. In the closed position, the flappers 204 rest against the seat region 205, and fluid is prevented from flowing through the flow channels 212.

When fluid pressure from the upstream side 210 of the valve body 202 increases to a certain predetermined level, the flappers 204 begin to open, thereby moving away from the seat region 205 and toward the stop 208. As the flappers 204 move toward the stop 208, the check valve 110 is in one or more partially open positions, in which fluid is allowed to flow through the flow channels 212 to at least a certain extent. As the fluid pressure continues to increase, the flappers 204 continue to move toward the stop 208. Once the flappers 204 reach the sleeve 520 portion of the stop 208, the flappers 204 stop via their contact with the sleeve 520. The check valve 110 is then in the fully open position as depicted in FIGS. 3 and 4, and fluid is allowed to flow freely through the flow channels 212. Because the sleeve 520 comprises an elastomer material, noise and wear are minimized as the flappers 204 contact the sleeve 520.

Conversely, when fluid pressure reverses, the flappers 204 begin to close, thereby moving away from the stop 208 (and the sleeve 520 portion thereof) and toward the seat region 205, as a result of a bias in the flappers 204 toward the closed position, if there is a spring incorporated into the design. Alternatively, in certain embodiments including a spring (not depicted), the flappers 204 may begin to close when the fluid pressure from the upstream side 210 of the valve body 202 decreases. In either event, the flappers 204 move quickly toward the seat region 205 and, during this quick movement, the check valve 110 is once again briefly in one or more partially open positions, in which fluid is allowed to flow through the flow channels 212 at least to a certain extent.

Once the flappers 204 reach the seat region 205, the flappers 204 stop via their contact with the seat region 205 and rest against the seat region 205. The check valve 110 is once again in the fully closed position as depicted in FIGS. 2 and 5, and fluid is prevented from flowing through the flow channels 212. Also, if at any time there is a backflow of fluid from the downstream side 209 toward the upstream side 210 of the valve body 202, the flappers 204 will similarly close by moving toward the seat region 205 in order to stop such a backflow of fluid through the flow channels 212. Because the seat region 205 comprises an elastomer material, noise and wear are minimized as the flappers 204 contact the seat region 205.

The opening and closing of the flappers 204 is generally very sudden, and results in a significant impact force that, in the case of traditional check valves, would result in undesirable noise that can be disturbing to a pilot or other individuals onboard an airplane. In traditional check valves, this impact, along with the environments in which such check valves are typically used, could also result in wear on such traditional check valves. However, the design of the check valve 110 in accordance with the present invention allows for significantly reduced noise. In addition, the check valve 110 potentially also results in reduced wear and increased robustness, without interfering with the flow path, and while still have the capabilities of an all-metal design, for example with desired levels of durability and impact resistance, and while requiring little or no maintenance.

Accordingly, there has been provided a check valve 110 that provides efficient operation with reduced noise and wear and with minimal disruption to the flow path of fluids within the check valve 110, and with similar durability and robustness of traditional check valves with an all-metal design. While depicted in FIG. 1 as part of an air distribution system 100, it will be appreciated that the check valve 110 can be used in any one of numerous different types of systems and environments.

While the invention has been described with reference to a preferred embodiment, it will be understood by those skilled in the art that various changes may be made and equivalents may be substituted for elements thereof without departing from the scope of the invention. In addition, many modifications may be made to adapt to a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A check valve (110) comprising:
a valve body (202) having an upstream side (210), a downstream side (209), and a first valve flow channel (212) that extends between the upstream and downstream sides (210, 209);
a flapper (204) rotationally mounted on the valve body (202) and movable between a closed position, in which the flapper (204) at least substantially closes the first valve flow channel (212), and an open position, in which the flapper (204) at least substantially opens the first valve flow channel (212); and
a seat region (205) formed in the valve body (202), the seat region (205) configured to seat the flapper (204) and make contact therewith when the flapper (204) is in the closed position, the seat region (205) comprising an elastomer material.

2. The check valve (110) of Claim 1, further comprising:
a stop (208) mounted on the valve body (202) and configured to contact the flapper (204) when the flapper (204) is in a fully open position, wherein the stop (208) is made at least partially of a second elastomer material.

3. The check valve (110) of Claim 2, wherein the stop (208) comprises:
a stop tube (518); and
a sleeve (520) at least partially surrounding the stop tube (518), the sleeve (520) comprising the second elastomer material.

4. The check valve (110) of Claim 1, further comprising:
an encasement (206) coupled to the valve body (202) that at least partially surrounds the seat region (205), wherein the seat region (205) is attached on a first side to the valve body (202) and on a second side to the encasement (206).

5. A check valve (110) comprising:
a valve body (202) having an upstream side (210), a downstream side (209), and a first valve flow channel (212) that extends between the upstream and downstream sides (210, 209);
a flapper (204) rotationally mounted on the valve body (202) and movable between a closed position, in which the flapper (204) at least substantially closes the first valve flow channel (212), and an open position, in which the flapper (204) at least substantially opens the first valve flow channel (212); and
a stop (208) mounted on the valve body (202) and configured to contact the flapper (204) when the flapper (204) is in a fully open position, the stop (208) comprising:
a stop tube (518); and
a sleeve (520) at least partially surrounding the stop tube (518), the sleeve (520) comprising the elastomer material.

6. The check valve (110) of Claim 5, further comprising:
a seat region (205) formed in the valve body (202), the seat region (205) configured to seat the flapper (204) and make contact therewith when the flapper (204) is in the closed position, wherein the seat region (205) comprises a second elastomer material.

7. The check valve (110) of Claim 6, further comprising:
an encasement (206) coupled to the valve body (202) that at least partially surrounds the seat region (205);
wherein the seat region (205) is attached on a first side to the valve body (202) and on a second side to the encasement (206).

8. A check valve (110) comprising:
a valve body (202) having an upstream side (210), a downstream side (209), and a plurality of valve flow channels (212) that extend between the upstream and downstream sides (210, 209);
a plurality of flappers (204) rotationally mounted on the valve body (202), each flapper (204) movable between a closed position, in which such flapper (204) at least substantially closes a valve flow channel (212), and an open position, in which such flapper (204) at least substantially opens a valve flow channel (212); and
a seat region (205) formed in the valve body (202), the seat region (205) configured to seat the plurality of flappers (204) and make contact therewith when the plurality of flappers (204) are in the closed position, the seat region (205) comprising an elastomer material.

9. The check valve (110) of Claim 8, further comprising:
an encasement (206) coupled to the valve body (202) that at least partially surrounds the seat region (205);
wherein the seat region (205) is attached on a first side to the valve body (202) and on a second side to the encasement (206).

10. The check valve (110) of Claim 9, further comprising:
a stop (208) mounted on the valve body (202) and configured to contact the plurality of flappers (204) when the plurality of flappers (204) are in a fully open position, wherein the stop (208) comprises:
a stop tube (518); and
a sleeve (520) at least partially surrounding the stop tube (518), the sleeve (520) comprising a second elastomer material.
